# EUROPEAN PATENT APPLICATION

(11) **EP 4 831 470 A1**
(43) Date of publication of application: **28.10.2026**
(21) Application number: 26174826.3
(22) Date of filing: 27.04.2026
(51) Int. Cl.: F02C 7/36, F01D 15/10, F01D 15/12, F02C 3/107, F02C 3/113, F02C 7/32

(54) **AIRCRAFT POWERPLANT ELECTRIC MACHINE WITH DIFFERENTIAL GEARTRAIN**

(30) Priority: 25.04.2025 US 202519190200
(71) Applicant: RTX Corporation, Farmington, CT 06032 (US)
(72) Inventor: CLARK, Thomas E., Wells, 04090 (US); BREAULT, Andrew E., Bolton, 06043 (US); AKIN, John, Charlotte, 28205 (US); GATES, Roger, West Hartford, 06107 (US); YAZICI, Murat, Glastonbury, 06033 (US); CHOE, Jung Muk, Glastonbury, 06033 (US)
(74) Representative: Dehns

(57) **Abstract**

An assembly is provided for an aircraft powerplant (20). This aircraft powerplant assembly includes a compressor section (43), a combustor section (44), a turbine section (45), a flowpath (50), a first rotating structure (70A), a second rotating structure (70B), a differential geartrain (112) and an electric machine (100). The flowpath (50) extends through the compressor section (43), the combustor section (44) and the turbine section (45). The first rotating structure (70A) includes a first turbine rotor (65) arranged along the flowpath (50) in the turbine section (45). The second rotating structure (70B) includes a second turbine rotor (66) arranged along the flowpath (50) in the turbine section (45). The differential geartrain (112) is operatively coupled to the first rotating structure (70A) and the second rotating structure (70B). The electric machine (100) includes an electric machine rotor. The electric machine rotor is integrated with the differential geartrain (112).

## Description

### BACKGROUND OF THE INVENTION

### 1. Technical Field

This invention relates generally to an aircraft and, more particularly, to an electric machine system for an aircraft powerplant.

### 2. Background Information

An aircraft powerplant such as a turbofan engine may include an electric machine system. Various types and configurations of electric machine systems are known in the art. While these known electric machine systems have various benefits, there is still room in the art for improvement.

### SUMMARY OF THE INVENTION

According to an aspect of the present invention, an assembly is provided for an aircraft powerplant. This aircraft powerplant assembly includes a compressor section, a combustor section, a turbine section, a flowpath, a first rotating structure, a second rotating structure, a differential geartrain and an electric machine. The flowpath extends through the compressor section, the combustor section and the turbine section. The first rotating structure includes a first turbine rotor arranged along the flowpath in the turbine section. The second rotating structure includes a second turbine rotor arranged along the flowpath in the turbine section. The differential geartrain is operatively coupled to the first rotating structure and the second rotating structure. The electric machine includes an electric machine rotor. The electric machine rotor is integrated with the differential geartrain.

According to another aspect of the present invention, another assembly is provided for an aircraft powerplant. This aircraft powerplant assembly includes a first rotating structure, a second rotating structure, a differential geartrain and an electric machine. The first rotating structure includes a first compressor rotor and/or a first turbine rotor. The second rotating structure is rotationally independent of the first rotating structure. The second rotating structure includes a second compressor rotor and/or a second turbine rotor. The differential geartrain includes a sun gear, a ring gear, a plurality of intermediate gears and a carrier. The sun gear is coupled to and rotatable with the second rotating structure. The intermediate gears are arranged circumferentially around the sun gear in an array. Each of the intermediate gears is radially between and meshed with the sun gear and the ring gear. The carrier is coupled to and rotatable with the first rotating structure. Each of the intermediate gears is rotatably attached to the carrier. The electric machine includes an electric machine rotor coupled to and rotatable with the ring gear. The electric machine is configurable as an electric motor during an electric motor mode of operation and/or an electric generator during an electric generator mode of operation.

According to still another aspect of the present invention, another assembly is provided for an aircraft powerplant. This aircraft powerplant assembly includes a first rotating structure, a second rotating structure, a differential geartrain and an electric machine. The first rotating structure includes a first compressor rotor and/or a first turbine rotor. The second rotating structure is rotationally independent of the first rotating structure. The second rotating structure includes a second compressor rotor and/or a second turbine rotor. The differential geartrain includes a sun gear, a ring gear, a plurality of intermediate gears and a carrier. The sun gear is coupled to and rotatable with the second rotating structure. The ring gear is coupled to and rotatable with the first rotating structure. The intermediate gears are arranged circumferentially around the sun gear in an array. Each of the intermediate gears is radially between and meshed with the sun gear and the ring gear. Each of the intermediate gears is rotatably attached to the carrier. The electric machine includes an electric machine rotor coupled to and rotatable with the carrier. The electric machine is configurable as an electric motor during an electric motor mode of operation and/or an electric generator during an electric generator mode of operation.

Optionally, and in accordance with any of the above, the electric machine rotor may axially overlap and may be coaxial with the carrier.

Optionally, and in accordance with any of the above, the electric machine rotor may axially overlap and may be coaxial with the ring gear.

Optionally, and in accordance with any of the above, the electric machine rotor may be configured to rotate about an axis. The differential geartrain may include a first component, a second component and a third component. The first component may be coupled to the first rotating structure. The second component may be coupled to the second rotating structure. The third component may be coupled to the electric machine rotor with the electric machine rotor extending axially along the third component.

Optionally, and in accordance with any of the above, a center of the electric machine rotor may be axially aligned with a center of the third component along the axis.

Optionally, and in accordance with any of the above, the electric machine rotor may circumscribe the third component.

Optionally, and in accordance with any of the above, the electric machine rotor may be mechanically attached to the third component.

Optionally, and in accordance with any of the above, the electric machine rotor may be bonded to the third component.

Optionally, and in accordance with any of the above, the electric machine rotor may also extend axially along the first component and/or the second component.

Optionally, and in accordance with any of the above, the electric machine rotor may be coaxial with the first component, the second component and the third component.

Optionally, and in accordance with any of the above, the differential geartrain may be configured as an epicyclic geartrain.

Optionally, and in accordance with any of the above, the differential geartrain may include a sun gear, a ring gear, a plurality of intermediate gears and a carrier. The sun gear may be coupled to the second rotating structure. The ring gear may be coupled to the electric machine rotor with the electric machine rotor axially overlapping and circumscribing the ring gear. The intermediate gears may be arranged circumferentially around the sun gear in an array. Each of the intermediate gears may be radially between and meshed with the sun gear and the ring gear. The carrier may be coupled to the first rotating structure. Each of the intermediate gears may be rotatably attached to the carrier.

Optionally, and in accordance with any of the above, the first turbine rotor may be arranged along the flowpath between the combustor section and the second turbine rotor.

Optionally, and in accordance with any of the above, the second turbine rotor may be arranged along the flowpath between the combustor section and the first turbine rotor.

Optionally, and in accordance with any of the above, the differential geartrain may include a sun gear, a ring gear, a plurality of intermediate gears and a carrier. The sun gear may be coupled to the second rotating structure. The ring gear may be coupled to the first rotating structure. The intermediate gears may be arranged circumferentially around the sun gear in an array. Each of the intermediate gears may be radially between and meshed with the sun gear and the ring gear. The carrier may be coupled to the electric machine rotor with the electric machine rotor axially overlapping and circumscribing the carrier. Each of the intermediate gears may be rotatably attached to the carrier.

Optionally, and in accordance with any of the above, the first turbine rotor may be arranged along the flowpath between a combustor in the combustor section and the second turbine rotor.

Optionally, and in accordance with any of the above, the second turbine rotor may be arranged along the flowpath between a combustor in the combustor section and the first turbine rotor.

Optionally, and in accordance with any of the above, the differential geartrain and the electric machine may be coaxial with the first rotating structure and/or the second rotating structure.

Optionally, and in accordance with any of the above, the an axis the electric machine may be offset from an axis of the first rotating structure and/or an axis of the second rotating structure.

Optionally, and in accordance with any of the above, the differential geartrain may be operatively coupled to the first rotating structure and the second rotating structure through an accessory gearbox.

Optionally, and in accordance with any of the above, the assembly may also include a propulsor rotor operatively coupled to the second rotating structure independent of the differential geartrain.

Optionally, and in accordance with any of the above, the assembly may also include a second geartrain operatively coupled between the second rotating structure and the propulsor rotor.

Optionally, and in accordance with any of the above, the propulsor rotor may be a ducted propulsor rotor.

Optionally, and in accordance with any of the above, the propulsor rotor may be an open propulsor rotor.

Optionally, and in accordance with any of the above, the electric machine may be configurable as an electric motor during an electric motor mode of operation and/or an electric generator during an electric generator mode of operation.

The present invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial sectional schematic illustration of an aircraft propulsion system with a ducted propulsor rotor.
FIG. 2 is a schematic illustration of a portion of the aircraft propulsion system at an electric machine system.
FIG. 3 is an illustration of a differential geartrain.
FIG. 4 is a sectional schematic illustration of a portion of the aircraft propulsion system with the differential geartrain and an electric machine in a first arrangement.
FIG. 5 is a sectional schematic illustration of a portion of the aircraft propulsion system with the differential geartrain and the electric machine in a second arrangement.
FIG. 6 is a graph depicting engine rotating structure speed versus electric machine rotor speed.
FIG. 7 is a sectional schematic illustration of the aircraft propulsion system with an open propulsor rotor.

### DETAILED DESCRIPTION

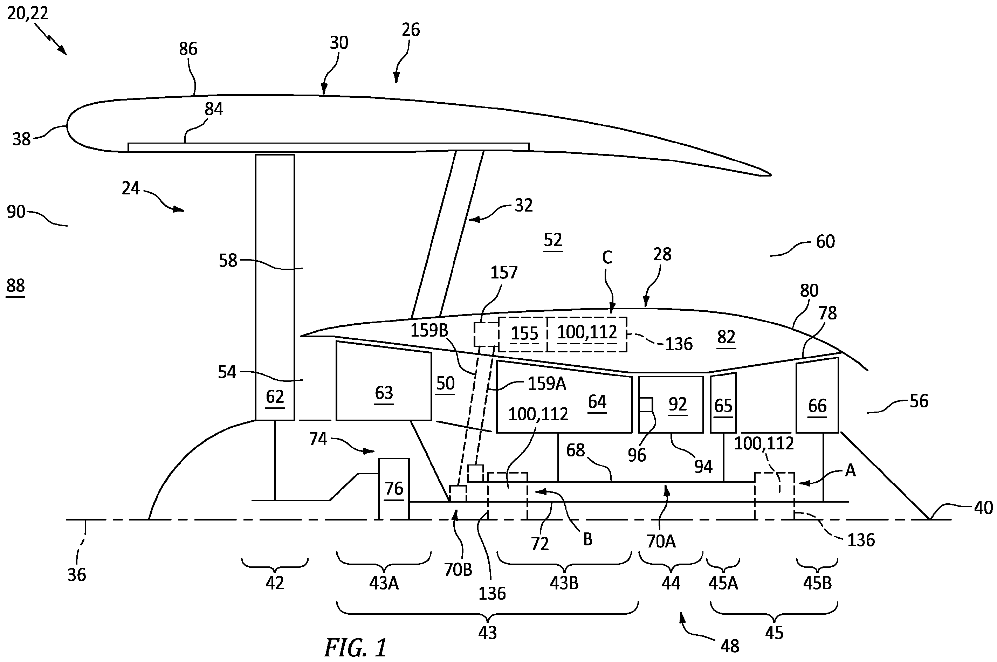

FIG. 1 illustrates a powerplant 20 for an aircraft. The aircraft may be an airplane, a drone (e.g., an unmanned aerial vehicle (UAV)) or any other manned or unmanned aerial vehicle or system. For ease of description, the aircraft powerplant 20 is described below as a propulsion system 22 for the aircraft and, more particularly, as a turbofan propulsion system. The aircraft powerplant 20 of the present invention, however, is not limited to such an exemplary propulsion system. The aircraft propulsion system 22, for example, may alternatively be configured as a turbojet propulsion system, a turboprop propulsion system, a turboshaft propulsion system, a propfan propulsion system, a pusher fan propulsion system, or any other type of ducted and/or open propulsor rotor propulsion system. Moreover, the aircraft powerplant 20 is not limited to propulsion system applications. The aircraft powerplant 20, for example, may also (or alternatively) be configured as an electrical power system for the aircraft; e.g., an auxiliary power unit (APU).

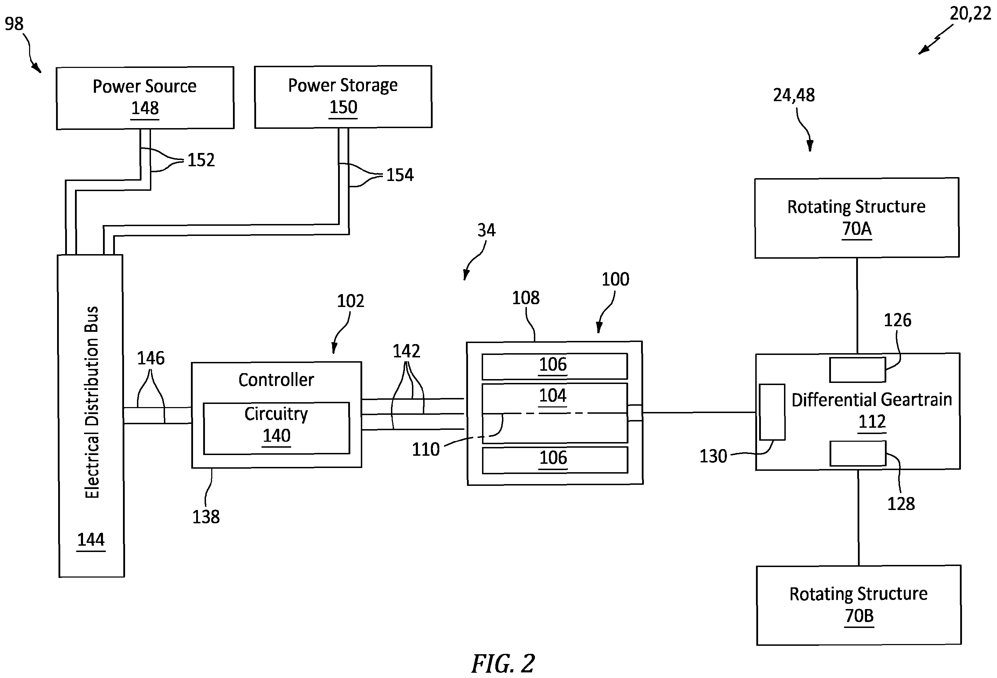

The aircraft propulsion system 22 includes a gas turbine engine 24 (e.g., a turbofan engine) housed within a stationary propulsion system housing 26, which propulsion system housing 26 of FIG. 1 includes an inner housing structure 28, an outer housing structure 30 and a guide vane structure 32 (e.g., a fan exit guide vane (FEGV) structure) extending radially between and connected to the inner housing structure 28 and the outer housing structure 30. The aircraft propulsion system 22 also includes an electric machine system 34 (see FIG. 2). The aircraft propulsion system 22 extends axially along an axis 36 of the aircraft propulsion system 22 between an axial upstream, forward end 38 of the aircraft propulsion system 22 and an axial downstream, aft end 40 of the aircraft propulsion system 22. Briefly, the propulsion system axis 36 may be a centerline axis of the aircraft propulsion system 22, the turbine engine 24 and/or one or more of its members. The propulsion system axis 36 may also or alternatively be a rotational axis for one or more members of the turbine engine 24.

The aircraft propulsion system 22 and its turbine engine 24 of FIG. 1 include a propulsor section 42 (e.g., a fan section), a compressor section 43, a combustor section 44 and a turbine section 45. The compressor section 43 of FIG. 1 includes a low pressure compressor (LPC) section 43A and a high pressure compressor (HPC) section 43B. The turbine section 45 of FIG. 1 includes a high pressure turbine (HPT) section 45A and a low pressure turbine (LPT) section 45B. At least (or only) the LPC section 43A, the HPC section 43B, the combustor section 44, the HPT section 45A and the LPT section 45B collectively form a core 48 (e.g., a gas generator) of the turbine engine 24. The aircraft propulsion system 22 and its turbine engine 24 of FIG. 1 also include a core flowpath 50 (e.g., an annular core flowpath) and a bypass flowpath 52 (e.g., an annular bypass flowpath). The core flowpath 50 extends sequentially through the LPC section 43A, the HPC section 43B, the combustor section 44, the HPT section 45A and the LPT section 45B from an airflow inlet 54 into the core flowpath 50 to a combustion products exhaust 56 out from the core flowpath 50. The bypass flowpath 52 extends through a bypass duct from an airflow inlet 58 into the bypass flowpath 52 to an airflow exhaust 60 from the bypass flowpath 52, where the bypass duct may be formed by the inner housing structure 28 and the outer housing structure 30. The bypass flowpath 52 and its bypass duct are configured to bypass (e.g., are disposed radially outboard of and extend along) the engine core 48 and the inner housing structure 28.

The propulsor section 42, the LPC section 43A, the HPC section 43B, the combustor section 44, the HPT section 45A and the LPT section 45B may be arranged sequentially along the propulsion system axis 36 within the propulsion system housing 26. The propulsor section 42 includes a bladed propulsor rotor 62; e.g., a fan rotor. The LPC section 43A includes a bladed low pressure compressor (LPC) rotor 63. The HPC section 43B includes a bladed high pressure compressor (HPC) rotor 64. The HPT section 45A includes a bladed high pressure turbine (HPT) rotor 65. The LPT section 45B includes a bladed low pressure turbine (LPT) rotor 66. Each of these engine rotors 62-66 includes a rotor base (e.g., a disk or a hub) and a plurality of rotor blades (e.g., airfoils, vanes, etc.). The rotor blades may be arranged into one or more stages axially along the respective engine rotor 62-66. The rotor blades in each stage are arranged and may be equispaced circumferentially around the respective rotor base in an annular array. Each of the rotor blades is connected to the respective rotor base. The rotor blades, for example, may be formed integral with or mechanically fastened, welded, brazed and/or otherwise attached to the respective rotor base. Each of the rotor blades projects spanwise (e.g., radially) out from the respective rotor base to a distal tip of the respective rotor blade.

The HPC rotor 64 is coupled to and rotatable with the HPT rotor 65. The HPC rotor 64 of FIG. 1, for example, is connected to the HPT rotor 65 through a high speed shaft 68. At least (or only) the HPC rotor 64, the HPT rotor 65 and the high speed shaft 68 collectively form a high speed rotating structure 70A; e.g., a high speed spool of the turbine engine 24 and its engine core 48. This high speed rotating structure 70A of FIG. 1 and its members 64, 65 and 68 are rotatable about the propulsion system axis 36. However, it is contemplated the high speed rotating structure 70A may alternatively be rotatable about another axis radially and/or angularly offset from the rotational axis of the propulsor rotor 62 and/or the centerline axis of the turbine engine 24.

The LPC rotor 63 is coupled to and rotatable with the LPT rotor 66. The LPC rotor 63 of FIG. 1, for example, is connected to the LPT rotor 66 through a (e.g., segmented) low speed shaft 72. At least (or only) the LPC rotor 63, the LPT rotor 66 and the low speed shaft 72 collectively form a low speed rotating structure 70B; e.g., a low speed spool of the turbine engine 24 and its engine core 48. This low speed rotating structure 70B of FIG. 1 and its members 63, 66 and 72 are rotatable about the propulsion system axis 36. The low speed rotating structure 70B of FIG. 1 therefore is coaxial with the high speed rotating structure 70A as well as the propulsor rotor 62. The low speed rotating structure 70B of FIG. 1 and its low speed shaft 72 also projects axially through an inner bore of the high speed rotating structure 70A and its high speed shaft 68. The present invention, however, is not limited to such an exemplary arrangement. For example, it is contemplated the low speed rotating structure 70B may alternatively be rotatable about another axis radially and/or angularly offset from the rotational axis of the propulsor rotor 62 and/or the centerline axis of the turbine engine 24.

The low speed rotating structure 70B is coupled to the propulsor rotor 62 through a rotating structure-to-propulsor (RSP) drivetrain 74. The RSP drivetrain 74 may be configured as a geared drivetrain, where a rotating structure-to-propulsor (RSP) geartrain 76 (e.g., a transmission, a speed change device, an epicyclic geartrain, etc.) is disposed between and operatively couples the propulsor rotor 62 to the low speed rotating structure 70B and its LPT rotor 66. With this arrangement, the propulsor rotor 62 may rotate at a different (e.g., slower) rotational speed than the low speed rotating structure 70B and its LPT rotor 66. Here, the propulsor rotor 62 and the low speed rotating structure 70B may rotate in a common (the same) direction about the propulsion system axis 36 or in opposite directions about the propulsion system axis 36 depending, for example, upon the specific configuration of the RSP geartrain 76. Alternatively, the RSP drivetrain 74 may be configured as a direct-drive drivetrain, where the RSP geartrain 76 is omitted. With such an arrangement, the propulsor rotor 62 rotates at a common (the same) rotational speed as the low speed rotating structure 70B and its LPT rotor 66.

The inner housing structure 28 of FIG. 1 includes an inner case 78 (e.g., a core case) for the turbine engine 24, an inner nacelle structure 80 (sometimes referred to as an inner fixed structure (IFS)) and an internal inner housing compartment 82 (e.g., an engine core compartment). The inner case 78 is disposed radially outboard of, extends axially along and may circumscribe one or more or all of the engine sections 43A-45B and the engine rotors 63-66. The inner case 78 may thereby house and provide a support structure for the respective engine sections 43A-45B and the engine rotors 63-66. The inner nacelle structure 80 is configured to provide an aerodynamic cover over the engine core 48 and its inner case 78. The inner housing compartment 82 of FIG. 1 is formed by and is disposed radially between the inner case 78 and an inner barrel of the inner nacelle structure 80. The inner housing structure 28 and its inner nacelle structure 80 may also form a radial inner peripheral boundary of the bypass flowpath 52.

The outer housing structure 30 of FIG. 1 includes an outer case 84 (e.g., a fan case) for the turbine engine 24 and an outer nacelle structure 86. The outer case 84 is disposed radially outboard of, extends axially along and may circumscribe the propulsor section 42 and its propulsor rotor 62. The outer case 84 may thereby house and may be configured as a containment structure for the propulsor section 42 and its propulsor rotor 62. The outer nacelle structure 86 is configured to provide an aerodynamic cover over the outer case 84. The outer housing structure 30 and its outer nacelle structure 86 may also form a radial outer peripheral boundary of the bypass flowpath 52.

During operation of the aircraft propulsion system 22 of FIG. 1, ambient air from an environment 88 external to the aircraft and its aircraft propulsion system 22 enters the aircraft propulsion system 22 and its turbine engine 24 through an airflow inlet 90. This air is propelled by the rotating propulsor rotor 62 in a downstream, aft direction towards the propulsion system aft end 40.

An outer stream of the air propelled by the rotating propulsor rotor 62 is directed into the bypass flowpath 52 through its bypass inlet 58, which air entering the bypass flowpath 52 may be referred to as "bypass air". The guide vane structure 32 conditions (e.g., straightens out, de-swirls, etc.) the flow of the bypass air within the bypass duct. This conditioned bypass air is subsequently directed out of the aircraft propulsion system 22 through the bypass exhaust 60 to provide forward thrust. This propulsion of the bypass air may account for a majority of the forward thrust generated by the aircraft propulsion system 22 and its turbine engine 24 of FIG. 1.

An inner stream of the air propelled by the rotating propulsor rotor 62 is directed into the core flowpath 50 through its core inlet 54, which air entering the core flowpath 50 may be referred to as "core air". This core air is compressed by the LPC rotor 63 and the HPC rotor 64 and is directed into a combustion chamber 92 (e.g., annular combustion chamber) of a combustor 94 (e.g., annular combustor) in the combustor section 44. Fuel is injected into the combustion chamber 92 by one or more fuel injectors 96 and mixed with the compressed core air to provide a fuel-air mixture. This fuel-air mixture is ignited and combustion products thereof flow through and sequentially drive rotation of the HPT rotor 65 and the LPT rotor 66. The rotation of the HPT rotor 65 and the LPT rotor 66 respectively drive rotation of the HPC rotor 64 and the LPC rotor 63 and, thus, compression of the air received from the core inlet 54. The rotation of the LPT rotor 66 also drives rotation of the propulsor rotor 62 through the RSP drivetrain 74 and its RSP geartrain 76.

Referring to FIG. 2, the electric machine system 34 is electrically coupled to an electrical system 98 for the aircraft and its aircraft propulsion system 22. The electric machine system 34 of FIG. 2 includes at least (or only) one electric machine 100 and at least (or only) one electric machine (EM) controller 102.

The electric machine 100 of FIG. 2 includes an electric machine rotor 104, an electric machine stator 106 and an electric machine housing 108; e.g., a case. The machine rotor 104 is rotatable about a rotational axis 110 of the machine rotor 104, which machine axis 110 may also be an axial centerline of the electric machine 100. The machine stator 106 is disposed next to and in electromagnetic communication with the machine rotor 104. The machine stator 106 of FIG. 2, in particular, is radially outboard of and circumscribes the machine rotor 104. With this arrangement, the electric machine 100 is configured as a radial flux electric machine. The electric machine 100 of the present invention, however, is not limited to such an exemplary rotor-stator configuration nor to radial flux arrangements. The machine rotor 104, for example, may alternatively be radially outboard of and circumscribe the machine stator 106. In another example, the machine rotor 104 may be axially next to the machine stator 106 configuring the electric machine 100 as an axial flux electric machine. Referring again to FIG. 2, the machine rotor 104 and the machine stator 106 are at least partially or completely housed within an interior of the machine housing 108.

The electric machine 100 is operatively coupled to the high speed rotating structure 70A and the low speed rotating structure 70B. The machine rotor 104 of FIG. 2, for example, is mechanically coupled to the high speed rotating structure 70A and the low speed rotating structure 70B through a differential geartrain 112.

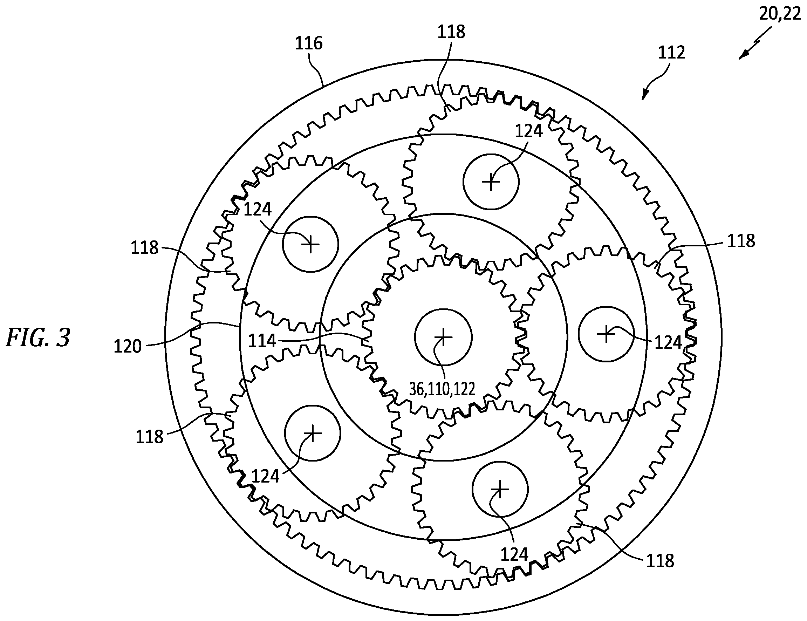

The differential geartrain 112 may be configured as or otherwise include an epicyclic geartrain. The differential geartrain 112 of FIG. 3, for example, includes a sun gear 114, a ring gear 116, a plurality of intermediate gears 118 and a carrier 120. The sun gear 114 is configured to rotate about an axis 122 of the differential geartrain 112. Briefly, the geartrain axis 122 of FIG. 3 is a rotational axis of the geartrain members 114, 116 and 120 and may be a centerline axis of the differential geartrain 112. The ring gear 116 is configured to rotate about the geartrain axis 122. This ring gear 116 is spaced radially outboard of the sun gear 114. The ring gear 116 also circumscribes the sun gear 114 as well as an array of the intermediate gears 118. The intermediate gears 118 are arranged circumferentially about the sun gear 114 and the geartrain axis 122 in the array; e.g., an annular array. Each of these intermediate gears 118 is disposed radially between and is engaged (e.g., meshed) with the sun gear 114 and the ring gear 116. Each of the intermediate gears 118 is rotatably mounted to the carrier 120 such that each intermediate gear 118 is rotatable about a rotational axis 124 of that respective intermediate gear 118, which rotational axis 124 is parallel to and laterally offset from (e.g., spaced radially outboard from) the geartrain axis 122. The carrier 120 is configured to rotate about the geartrain axis 122.

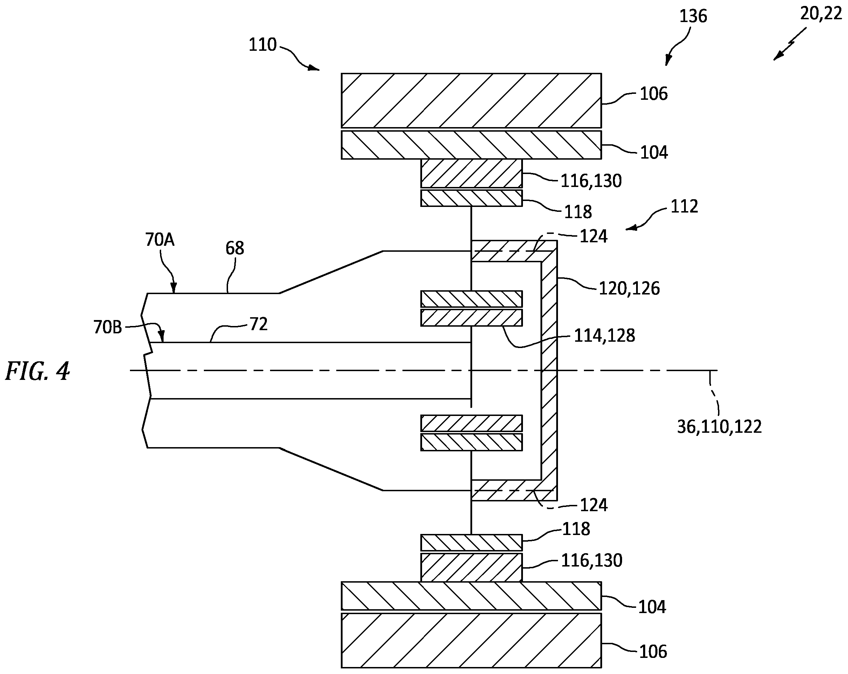

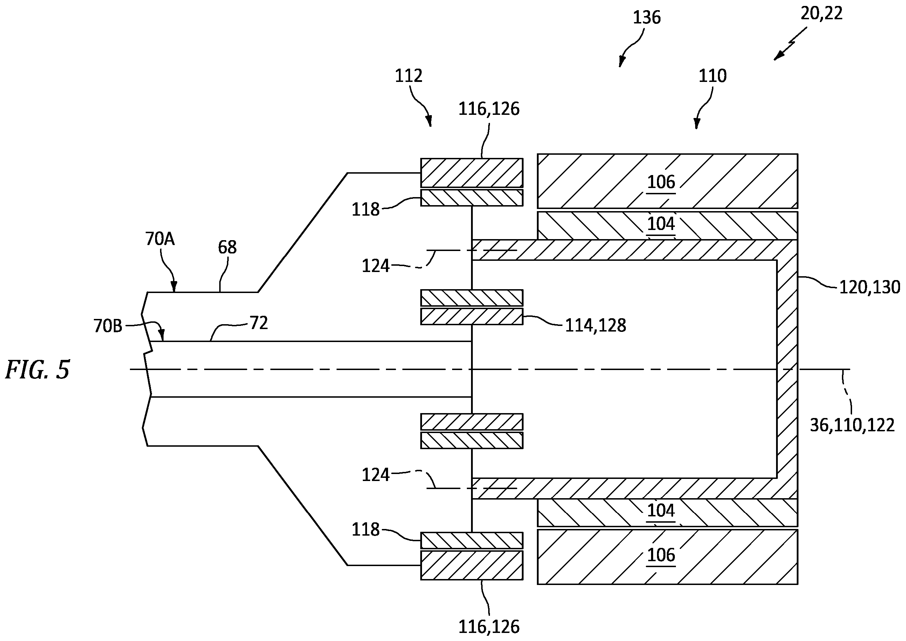

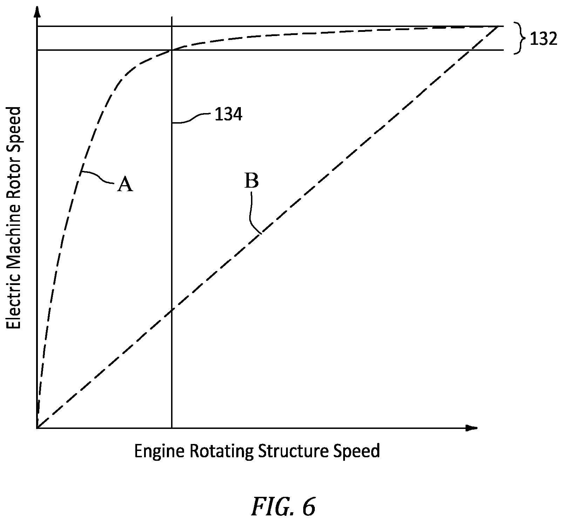

Referring to FIG. 2, the high speed rotating structure 70A is operatively coupled to a first component 126 of the differential geartrain 112. The low speed rotating structure 70B is operatively coupled to a second component 128 of the differential geartrain 112. The machine rotor 104 is operatively coupled to a third component 130 of the differential geartrain 112. Examples of such arrangements are shown in FIGS. 4 and 5. By operatively coupling the machine rotor 104 to the high speed rotating structure 70A and the low speed rotating structure 70B through the differential geartrain 112 with such arrangements, a rotational speed (see line A) of the machine rotor 104 may vary relative to a rotational speed (see line B) of each engine rotating structure 70A, 70B as shown in FIG. 6. The rotational speed of the machine rotor 104 may thereby operate within a relatively small speed band 132 when, for example, the low speed rotating structure 70B is rotating above a threshold speed 134. The electric machine 100 of FIG. 2 may thereby be tailored for operating within the speed band 132 (see FIG. 6). This may reduce electric machine size, reduce electric machine cooling, increase electric machine efficiency, etc.

In the embodiment of FIG. 4, the high speed rotating structure 70A and its high speed shaft 68 are mechanically coupled to and (e.g., directly) rotatable with the carrier 120. The high speed rotating structure 70A of FIG. 4 is thereby mechanically coupled to the differential geartrain 112 through the carrier 120 independent of the other geartrain members 114 and 116. The low speed rotating structure 70B and its low speed shaft 72 are mechanically coupled to and (e.g., directly) rotatable with the sun gear 114. The low speed rotating structure 70B of FIG. 4 is thereby mechanically coupled to the differential geartrain 112 through the sun gear 114 independent of the other geartrain members 116 and 120. The machine rotor 104 is mechanically coupled to and (e.g., directly) rotatable with the ring gear 116. Here, the mechanical coupling between the machine rotor 104 and the ring gear 116 may be a direct coupling where, for example, the machine rotor 104 contacts the ring gear 116. Alternatively, the mechanical coupling between the machine rotor 104 and the ring gear 116 may be an indirect coupling where, for example, the machine rotor 104 is connected to an intermediate member (e.g., a hub) and that intermediate member is connected to the ring gear 116. With the foregoing arrangements, the machine rotor 104 of FIG. 4 is mechanically coupled to the differential geartrain 112 through the ring gear 116 independent of the other geartrain members 114 and 120. In other embodiments however, it is contemplated the high speed rotating structure 70A and its high speed shaft 68 may alternatively be mechanically coupled to and rotatable with the sun gear 114, and the low speed rotating structure 70B and its low speed shaft 72 may be mechanically coupled to and rotatable with the carrier 120. Such an arrangement may be facilitated by including a remote location for the differential geartrain 112 as described below in further detail; e.g., see location C in FIG. 1.

In the embodiments of FIG. 5, the high speed rotating structure 70A and its high speed shaft 68 are mechanically coupled to and (e.g., directly) rotatable with the ring gear 116. The high speed rotating structure 70A of FIG. 5 is thereby mechanically coupled to the differential geartrain 112 through the ring gear 116 independent of the other geartrain members 114 and 120. The low speed rotating structure 70B and its low speed shaft 72 are mechanically coupled to and (e.g., directly) rotatable with the sun gear 114. The low speed rotating structure 70B of FIG. 5 is thereby mechanically coupled to the differential geartrain 112 through the sun gear 114 independent of the other geartrain members 116 and 120. The machine rotor 104 is mechanically coupled to and (e.g., directly) rotatable with the carrier 120. The machine rotor 104 of FIG. 5 is thereby mechanically coupled to the differential geartrain 112 through the carrier 120 independent of the other geartrain members 114 and 116. In other embodiments however, it is contemplated the high speed rotating structure 70A and its high speed shaft 68 may alternatively be mechanically coupled to and rotatable with the sun gear 114, and the low speed rotating structure 70B and its low speed shaft 72 may be mechanically coupled to and rotatable with the ring gear 116. Such an arrangement may be facilitated by including a remote location for the differential geartrain 112 as described below in further detail; e.g., see location C in FIG. 1.

Referring to FIGS. 4 and 5, in addition to operatively coupling the electric machine 100 and its machine rotor 104 to the engine rotating structures 70A and 70B, the differential geartrain 112 may also be integrated with or otherwise closely packaged with the electric machine 100. The electric machine 100 of FIGS. 4 and 5, for example, may be arranged with the differential geartrain 112 as part of a module 136. Within this module 136, one or more of the electric machine members 104 and/or 106 may be axially aligned with one or more members 114, 116 and/or 118 of the differential geartrain 112. The electric machine members 104 and 106 of FIG. 4, for example, are axially aligned with the differential geartrain members 114, 116 and 118. Here, the electric machine 100 and its members 104 and 106 are disposed radially outboard of the differential geartrain 112 and its members 114, 116, 118 and 120. The electric machine 100 and its members 104 and 106 extend axially along (e.g., axially overlap) and extend circumferentially about (e.g., circumscribe) the differential geartrain 112 and its members 114, 116, 118 and 120. Here too, an axial center of one or more of the electric machine members 104 and/or 106 may be axially aligned with an axial center of one or more of the differential geartrain members 114, 116 and/or 118 along the axis 110, 122. In another example, referring to FIG. 5, the electric machine members 104 and 106 are axially aligned with the carrier 120 and may be axially offset from the other differential geartrain members 114, 116 and 118. Here, the electric machine 100 and its members 104 and 106 are disposed radially outboard of the carrier 120 to an axial side of the other differential geartrain members 114, 116 and 118. The electric machine 100 and its members 104 and 106 extend axially along (e.g., axially overlap) and extend circumferentially about (e.g., circumscribe) the carrier 120. With the arrangements of FIGS. 4 and 5, the electric machine 100 and its members 104 and 106 are coaxial with the differential geartrain 112 and its members 114, 116 and 120.

Referring to FIGS. 4 and 5, the machine rotor 104 may radially engage or be integrated with the third component 130 of the differential geartrain 112; e.g., the ring gear 116 of FIG. 4 or the carrier 120 of FIG. 5. The mechanical coupling between the machine rotor 104 and the third component 130 of the differential geartrain 112, for example, may be facilitated through a mechanical attachment (e.g., via a spline connection, an interference connection, a bolted connection, etc.), a bonded attachment (e.g., a brazed connection, a welded connection, etc.) and/or another physical (e.g., direct) connection between the machine rotor 104 and the third component 130 of the differential geartrain 112. By providing such a direct connection between the machine rotor 104 and the third component 130 of the differential geartrain 112, the size of the module 136 may be further reduced. Moreover, reducing or omitting intermediate couplings between the machine rotor 104 and the third component 130 of the differential geartrain 112 may reduce transmission losses between the electric machine 100 and the differential geartrain 112. However, in other embodiments, it is contemplated an intermediate coupling may be provided between the machine rotor 104 and the third component 130 of the differential geartrain 112, for example, to spatially shift those components relative to one another.

Referring to FIG. 2, the electric machine 100 may be configurable as an electric motor and/or an electric generator; e.g., an electric motor-generator. For example, during a motor mode of operation, the electric machine 100 may operate as the electric motor to convert electricity received from the aircraft electrical system 98. The machine stator 106, for example, may generate an electromagnetic field with the machine rotor 104 using a current of electricity received from the aircraft electrical system 98 through the EM controller 102. This electromagnetic field may drive rotation of the machine rotor 104. The machine rotor 104, in turn, may provide mechanical power to and drive rotation of one or more of the engine rotating structure 70A and/or 70B through the differential geartrain 112. This mechanical power may be provided to boost power or completely power the rotation of the respective engine rotating structure(s) 70. By contrast, during a generator mode of operation, the electric machine 100 may operate as the electric generator to convert mechanical power, received from one or more of the engine rotating structure 70A and/or 70B through the differential geartrain 112, into electricity. Rotation of the machine rotor 104, for example, may be rotationally driven by rotation of the respective engine rotating structure(s) 70. The rotation of the machine rotor 104 may generate an electromagnetic field with the machine stator 106, and the machine stator 106 may convert energy from the electromagnetic field into electricity. The electric machine 100 may then provide a current of electricity to the aircraft electrical system 98 through the EM controller 102 for storage and/or further use. The electric machine 100 of the present invention, however, are not limited to such exemplary operation. For example, the electric machine 100 may alternatively be configured as a dedicated electric generator; e.g., without the electric motor functionality. The electric machine 100 may alternatively be configured as a dedicated electric motor; e.g., without the electric generator functionality.

The EM controller 102 includes a controller housing 138 and internal controller circuitry 140. The controller housing 138 may be configured as an enclosed case (e.g., a closed or sealed container) for the respective controller circuitry 140. The controller circuitry 140 is disposed within an interior of the controller housing 138; e.g., an internal chamber or other volume(s) within and enclosed by the controller housing 138. The controller circuitry 140 includes various electrical components, connectors and the like. Examples of the electrical components include, but are not limited to, printed circuit board(s) (PCB(s)), power electronics converter(s), electrical inductor(s), electrical inverter(s), electrical amplifier(s), electrical switch(es) (e.g., contactor(s), relay(s), etc.), a processing device, memory, a communication module, electrical transformer(s), electrical rectifier(s), and/or the like. The present invention, however, is not limited to such an exemplary arrangement. For example, it is contemplated the electric machine 100 and the EM controller 102 may alternatively share a common housing.

The EM controller 102 is electrically coupled to the electric machine 100 through one or more electric cables 142; e.g., high voltage electric cables, power feeder cables, etc. More particularly, the controller circuitry 140 of the EM controller 102 is electrically coupled to the electric machine 100 and its machine stator 106 through the electric cables 142. Similarly, the EM controller 102 is electrically coupled to an electrical distribution bus 144 of the aircraft electrical system 98 through one or more electric cables 146; e.g., high voltage electric cables, power feeder cables, etc. More particularly, the controller circuitry 140 of the EM controller 102 is electrically coupled to the aircraft electrical system 98 and its electrical distribution bus 144 through the electric cables 146. The present invention, however, is not limited to such an exemplary arrangement. For example, it is contemplated the EM controller 102 may abut against the electric machine 100 to facilitate a direct electrical coupling between the electric machine 100 and the EM controller 102. In another example, one or more of the sets of electric cables 142 and/or 146 may be replaced by an electrical bus bar. In still another example, where the electric machine 100 and the EM controller 102 share a common housing, the electronics for these components 100 and 102 may be integrated together.

The EM controller 102 and its controller circuitry 140 are configured to control operation of the electric machine 100. For example, when operating as the electric motor, the EM controller 102 and its controller circuitry 140 are configured to regulate a flow of electricity from the aircraft electrical system 98 to the electric machine 100. This electricity flow regulation may include: (a) turning-on the flow of electricity from the aircraft electrical system 98 to the electric machine 100 (e.g., electrically coupling the electric machine 100 to the aircraft electrical system 98); (b) turning-off the flow of electricity from the aircraft electrical system 98 to the electric machine 100 (e.g., electrically decoupling the electric machine 100 from the aircraft electrical system 98); (c) moderating the flow of electricity from the aircraft electrical system 98 to the electric machine 100. Here, the EM controller 102 operates as a motor controller. In another example, when operating as the electric generator, the EM controller 102 and its controller circuitry 140 are configured to regulate a flow of electricity from the electric machine 100 to the aircraft electrical system 98. This electricity flow regulation may include: (a) turning-on the flow of electricity from the electric machine 100 to the aircraft electrical system 98 (e.g., electrically coupling the electric machine 100 to the aircraft electrical system 98); (b) turning-off the flow of electricity from the electric machine 100 to the aircraft electrical system 98 (e.g., electrically decoupling the electric machine 100 from the aircraft electrical system 98); (c) moderating the flow of electricity from the electric machine 100 to the aircraft electrical system 98. Here, the EM controller 102 operates as a generator controller.

The aircraft electrical system 98 includes the electrical distribution bus 144. This aircraft electrical system 98 may also include a power source 148 and/or a power storage 150. The electrical distribution bus 144 is electrically coupled to the electric machine 100 through the EM controller 102. The electrical distribution bus 144 is also electrically coupled to the power source 148 and the power storage 150 through one or more respective electric cables 152 and 154 (e.g., high voltage electric cables, power feeder cables, etc.) and/or electrical bus bars. Of course, the electrical distribution bus 144 may also be electrically coupled to one or more additional electric components of the aircraft propulsion system 22 and/or one or more additional electric components of the aircraft outside of the aircraft propulsion system 22; e.g., airframe mounted electric components, etc. With this arrangement, the electrical distribution bus 144 provides an intermediate connection between the various electrical members 100 (via 102), 148 and/or 150. The power source 148 may be an electric generator powered by the turbine engine 24 (see FIG. 1) or an electric generator powered by another aircraft powerplant; e.g., an engine of a companion aircraft propulsion system, an engine of an auxiliary power unit (APU), a fuel cell system, etc. The power storage 150 is configured to receive electricity from the electrical distribution bus 144 for storage. The power storage 150 is also configured to provide the stored electricity to the electrical distribution bus 144. The power storage 150, for example, may be configured as or otherwise include one or more electricity storage devices; e.g., batteries, super capacitors, etc.

In some embodiments, referring to FIGS. 4 and 5, the electric machine 100 and its machine rotor 104 may be coaxial with one or both of the engine rotating structures 70A and/or 70B. Referring to FIG. 1, the module 136 and its members 100 and 112 (see FIGS. 4 and 5), for example, may be disposed at an interior location radially inboard of the core flowpath 50 within the engine core 48; e.g., see locations A and B. At the location A, the module 136 and its members 100 and 112 may be axially aligned with or disposed axially near a mid-turbine frame (MTF). At the location B, the module 136 and its members 100 and 112 may be axially aligned with or disposed near an intermediate case between the compressor rotors 63 and 64 (or alternatively further forward at or near a front center body). In other embodiments, one or more of the axes 110, 122 (see FIGS. 3-5) may be laterally offset (e.g., spaced radially outboard) from the propulsion system axis 36. The module 136 and its members 100 and 112, for example, may be disposed in the inner housing compartment 82 radially outboard of the core flowpath 50 and the engine core 48; e.g., see location C. With such an arrangement, the first and the second components 126 and 128 of the differential geartrain 112 (see FIG. 2) may be operatively coupled to the engine rotating structures 70A and 70B through respective drivetrains. Each of these drivetrains may be configured as or otherwise include a shaft, a tower shaft assembly, an accessory gearbox, another gearbox (e.g., an angle gearbox), and/or the like. By mounting the module 136 and its members 100 and 112 with an accessory gearbox 155 that couples the module 136 to the shafts 68 and 72 through an angle gearbox 157 and tower shaft assemblies 159A and 159B (generally referred to as "159"), these intermediate components 155, 157 and 159 between the module 136 and the shafts 68 and 72 may be configured to adjust (e.g., tune) a speed ratio for the differential geartrain 112 and a speed range for the electric machine 100 and/or change a direction of rotation to the module 136. Mounting the module 136 to the accessory gearbox 155 may also facilitate various permutations of inputs / outputs to and from the differential geartrain 112. Moreover, locating the module 136 within the inner housing compartment 82 may facilitate configuring the module 136 as a line replaceable unit (LRU) as well as facilitate positioning the module 136 in a cooler region of the aircraft propulsion system 22. The present invention, however, is not limited to such exemplary arrangements. For example, it is contemplated the electric machine 100 may alternatively be arranged elsewhere within the aircraft propulsion system 22; e.g., within an internal compartment of the outer housing structure 30.

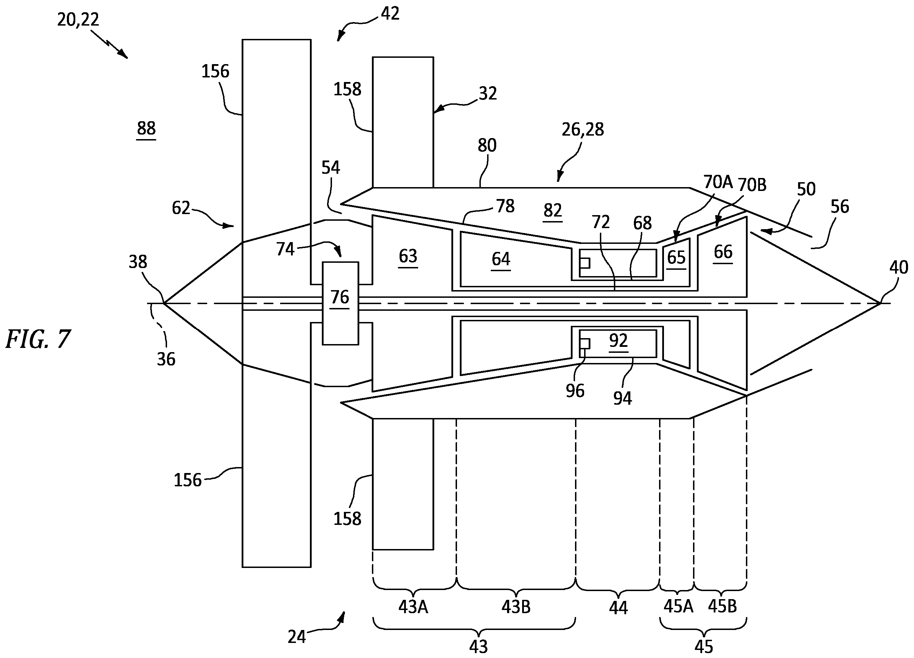

The aircraft propulsion system 22 of FIG. 1 is described above as a ducted propulsor propulsion system; e.g., the turbofan propulsion system. The present invention, however, is not limited to such an exemplary aircraft propulsion system. For example, referring to FIG. 7, the outer housing structure 30 (see FIG. 1) may be omitted from the propulsion system housing 26 to open the propulsor rotor 62 up to the external environment 88. More particularly, the propulsor rotor 62 of FIG. 7 includes a plurality of open propulsor blades 156 arranged circumferentially about the propulsion system axis 36 in an array; e.g., a circular array. This array of the propulsor blades 156 may be unshrouded or alternatively shrouded by a tubular propulsor rotor shroud dedicated to the propulsor rotor 62 for example. Each of these propulsor blades 156 projects spanwise (e.g., radially) out from a base of the propulsor rotor 62, into the external environment 88, to a distal tip of the respective propulsor blade 156. Each propulsor blade 156 is thereby configured as an un-ducted propulsor blade which is exposed to (e.g., disposed in) the surrounding external environment 88. With this arrangement, the propulsor rotor 62 is an open propulsor rotor (e.g., an un-ducted propulsor rotor) and the aircraft propulsion system 22 is configured as an open rotor propulsion system. Moreover, the inner housing structure 28 and its members may form an exterior of the aircraft propulsion system 22 and may border the external environment 88.

The guide vane structure 32 may also be open to the external environment 88 forming an open guide vane structure. This guide vane structure 32 of FIG. 7 includes a plurality of open exit guide vanes 158; e.g., airfoils. The guide vanes 158 are arranged and may (or may not) be equispaced circumferentially about the propulsion system axis 36 in an array; e.g., a circular array. This array of the guide vanes 158 may be unshrouded or alternatively shrouded by a tubular guide vane shroud dedicated to the guide vane structure 32 for example. This guide vane structure 32 and its guide vanes 158 are arranged axially next to (e.g., adjacent) the propulsor rotor 62 and its propulsor blades 156. The guide vane structure 32 and its guide vanes 158 of FIG. 7, for example, are arranged downstream of the propulsor rotor 62 and its propulsor blades 156, without (e.g., any) other elements axially therebetween to obstruct, turn and/or otherwise influence the air propelled by the propulsor rotor 62 to the guide vane structure 32. Each of the guide vanes 158 projects radially out from an exterior surface of the inner housing structure 28, into the external environment 88, to a distal tip of the respective guide vane 158. Each guide vane 158 is thereby configured as an un-ducted guide vane which is exposed to (e.g., disposed in) the surrounding external environment 88. With the foregoing arrangement, the guide vane structure 32 and its guide vanes 158 are configured to condition (e.g., straighten out, de-swirl, etc.) an outer stream of air propelled by the propulsor rotor 62 within the external environment 88 that bypass the engine core 48. Of course, in other embodiments, the guide vane structure 32 may be omitted where, for example, the aircraft propulsion system 22 is alternatively configured as a counter-rotating open rotor (CROR) aircraft propulsion system, etc.

While the turbine engine 24 in FIG. 1 and FIG. 7 is shown with a particular two rotating structure arrangement (e.g., a two-spool architecture), the present invention is not limited thereto. For example, the LPC rotor 63 may be omitted to configure the LPT rotor 66 as a power turbine (PT) rotor for the propulsor rotor 62. The turbine engine 24 may also or alternatively include another rotating structure with a bladed compressor rotor in the compressor section 43 and a bladed turbine rotor in the turbine section 45; e.g., an intermediate speed spool for the engine core 48.

While various embodiments of the present invention have been described, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. An assembly for an aircraft powerplant, comprising:
a compressor section;
a combustor section;
a turbine section;
a flowpath extending through the compressor section, the combustor section and the turbine section;
a first rotating structure comprising a first turbine rotor arranged along the flowpath in the turbine section;
a second rotating structure comprising a second turbine rotor arranged along the flowpath in the turbine section;
a differential geartrain operatively coupled to the first rotating structure and the second rotating structure; and
an electric machine comprising an electric machine rotor, the electric machine rotor integrated with the differential geartrain,
optionally wherein the differential geartrain is configured as an epicyclic geartrain.

2. The assembly of claim 1, wherein:
the electric machine rotor is configured to rotate about an axis; and
the differential geartrain comprises a first component, a second component and a third component, the first component is coupled to the first rotating structure, the second component is coupled to the second rotating structure, and the third component is coupled to the electric machine rotor with the electric machine rotor extending axially along the third component.

3. The assembly of claim 2, wherein a center of the electric machine rotor is axially aligned with a center of the third component along the axis.

4. The assembly of claim 2 or 3, wherein the electric machine rotor circumscribes the third component.

5. The assembly of claim 2, 3 or 4, wherein:
the electric machine rotor is mechanically attached to the third component; or
the electric machine rotor is bonded to the third component.

6. The assembly of any of claims 2 to 5, wherein the electric machine rotor further extends axially along at least one of the first component or the second component.

7. The assembly of any of claims 2 to 6, wherein the electric machine rotor is coaxial with the first component, the second component and the third component.

8. The assembly of any preceding claim, wherein the differential geartrain includes:
a sun gear coupled to the second rotating structure;
a ring gear coupled to the electric machine rotor with the electric machine rotor axially overlapping and circumscribing the ring gear;
a plurality of intermediate gears arranged circumferentially around the sun gear in an array, each of the plurality of intermediate gears radially between and meshed with the sun gear and the ring gear; and
a carrier coupled to the first rotating structure, each of the plurality of intermediate gears rotatably attached to the carrier.

9. The assembly of any preceding claim, wherein the first turbine rotor is arranged along the flowpath between the combustor section and the second turbine rotor.

10. The assembly of any of claims 1 to 7, wherein the differential geartrain includes:
a sun gear coupled to the second rotating structure;
a ring gear coupled to the first rotating structure;
a plurality of intermediate gears arranged circumferentially around the sun gear in an array, each of the plurality of intermediate gears radially between and meshed with the sun gear and the ring gear; and
a carrier coupled to the electric machine rotor with the electric machine rotor axially overlapping and circumscribing the carrier, each of the plurality of intermediate gears rotatably attached to the carrier,
optionally wherein the first turbine rotor is arranged along the flowpath between a combustor in the combustor section and the second turbine rotor.

11. The assembly of any preceding claim, wherein the differential geartrain and the electric machine are coaxial with the first rotating structure and/or the second rotating structure.

12. The assembly of any preceding claim, wherein an axis the electric machine is offset from an axis of the first rotating structure and/or an axis of the second rotating structure.

13. The assembly of any preceding claim, wherein the differential geartrain is operatively coupled to the first rotating structure and the second rotating structure through an accessory gearbox.

14. The assembly of any preceding claim, further comprising a propulsor rotor operatively coupled to the second rotating structure independent of the differential geartrain.

15. The assembly of any preceding claim, wherein the electric machine is configurable as:
an electric motor during an electric motor mode of operation; and/or
an electric generator during an electric generator mode of operation.
